**Europäisches Patentamt**

**European Patent Office**

**Office européen des brevets**

(19)

(11) Veröffentlichungsnummer : **0 111 287**
**B1**

(12)

# EUROPÄISCHE PATENTSCHRIFT

(45) Veröffentlichungstag der Patentschrift :
**10.02.88**

(51) Int. Cl.⁴ : **H 01 B   1/24, C 08 L 23/28**

(21) Anmeldenummer : **83112221.3**

(22) Anmeldetag : **06.12.83**

(54) Unvernetzbare, elektrisch leitfähige Formmassen auf der Basis von thermoplastischen Kunststoffen und Russ.

(30) Priorität : **09.12.82 DE 3245589**

(43) Veröffentlichungstag der Anmeldung :
**20.06.84 Patentblatt 84/25**

(45) Bekanntmachung des Hinweises auf die Patenterteilung : **10.02.88 Patentblatt 88/06**

(84) Benannte Vertragsstaaten :
**AT DE FR GB IT NL**

(56) Entgegenhaltungen :
**FR-A- 2 063 139**
**FR-A- 2 286 169**
**US-A- 3 836 482**

(73) Patentinhaber : **HOECHST AKTIENGESELLSCHAFT**
**Postfach 80 03 20**
**D-6230 Frankfurt am Main 80 (DE)**

(72) Erfinder : **Wottka, Bernhard**
**Billerstrasse 8**
**D-8261 Kastl (DE)**
Erfinder : **Mücke, Rainer, Dr.**
**Hoher Göllweg 14**
**D-8269 Burgkirchen (DE)**

## Beschreibung

Die Erfindung betrifft eine elektrisch leitfähige, nicht vernetzte und kalandrierbare Formmasse auf der Basis von thermoplastischen Kunststoffen, anorganischen Füllstoffen und Ruß. Die Erfindung betrifft ferner Folien aus dieser Formmasse. Zur Herstellung von elektrisch leitfähigen thermoplastischen Formkörpern, beispielsweise Folien, sind im Prinzip zwei Methoden bekannt. Nach der einen Methode wird von einer Ruß und/oder andere elektrisch leitfähige Komponenten enthaltenden thermoplastischen Formmasse ausgegangen, die unvernetzbar (unhärtbar, unvulkanisierbar) ist. Bei der zweiten Methode enthalten die Formmassen auch noch Vernetzungsmittel (Härtungsmittel, Vulkanisiermittel). Ihre Verarbeitbarkeit, beispielsweise Extrudierung und Kalandrierung zu Folien, muß zweistufig durchgeführt werden. In der ersten Stufe, bei der die Verarbeitungstemperatur unter der Zersetzungstemperatur des Vernetzungsmittels liegt, wird das sogenannte Vorprodukt, beispielsweise die Rohfolie erhalten. In der zweiten Stufe wird dann das Vorprodukt vernetzt (gehärtet, vulkanisiert).

Der Vorteil der ersten Methode liegt nicht nur in der Möglichkeit der einstufigen Verarbeitbarkeit, sondern auch darin, daß die erhaltenen Folien wegen ihres unvernetzten Charakters quellverschweißbar sind.

In der deutschen Offenlegungsschrift 30 34 747 werden Formmassen auf der Basis von thermoplastischen Kunststoffen, wie Ethylencopolymerisaten oder Elastomeren, und ruß als elektrisch leitfähige Komponente beschrieben. Diese Formmassen sind nicht vernetzbar und gut leitfähig, ihre zwar einstufige Verarbeitbarkeit auf Extrudern und Kalandern ist aber relativ schwierig. Wegen ihrer hohen Leitfähigkeit nehmen sie während der bei relativ hohen Temperaturen ablaufenden Extrudierung und Kalandrierung besonders große Wärmemengen auf und kleben deshalb auf den heißen Metallflächen der Extruder und Kalander an, häufig resultieren daraus auch Verharzungen und sogar Verbrennungen der Formmasse beziehungsweise der Formkörper.

Um diese Nachteile zu vermeiden, wird in den deutschen Offenlegungsschriften 28 55 959 und 31 20 070 die Verwendung von Weichmacher enthaltenden Formmassen empfohlen. Damit wird die Verarbeitbarkeit wesentlich verbessert. Die erhaltenen Folien sind gut leitfähig und weisen durch den Weichmachergehalt und wegen ihres unvernetzten Charakters auch noch den Vorteil auf, daß sie — ebenso wie eine übliche Polyvinylchloridweichfolie — elastisch und weich (geschmeidig) sowie leicht und gut quellverschweißbar sind. Sie besitzen jedoch den Nachteil der Weichmachermigration. Der eingesetzte Weichmacher migriert bekanntlich früher oder später aus der Folie, wodurch sie spröde wird, ganz abgesehen von den Nachteilen, die aus der Migration selbst entstehen können.

Es ist deshalb auch schon versucht worden, unvernetzbare und elektrisch leitfähige Formmassen auf der Basis von thermoplastischen Kunststoffen und Ruß zur Verfügung zu stellen, die keine Weichmacher enthalten und dennoch gut extrudierbar und kalandrierbar sind, und die Folien ergeben, welche auch ohne Weichmachergehalt ein Eigenschaftsbild besitzen, das gleich oder sogar besser als dasjenige der Polyvinylchloridweichfolie ist.

So wird in der französischen Patentschrift 23 69 318 eine Formmasse beschrieben, die im wesentlichen aus chloriertem Polyethylen und gegebenenfalls Polyvinylchlorid als Hauptbestandteil, Ruß als elektrisch leitfähige Komponente und Füllstoffen, wie Calciumcarbonat und Talk, besteht. Diese Mischungen lassen insbesondere hinsichtlich Kalandrierbarkeit noch zu wünschen übrig. Wie die Beispiele der französischen Patentschrift zeigen, wird dieser Nachteil dadurch auszuschalten versucht, daß Weichmacher, wenn auch in relativ geringer Menge eingesetzt werden. Dieser Einsatz bringt aber wiederum die oben erwähnten Nachteile mit sich.

Aufgabe der Erfindung ist es daher, eine elektrisch leitfähige, nicht vernetzte und kalandrierbare Formmasse auf der Basis von thermoplastischen Kunststoffen, anorganischen Füllstoffen und Ruß zur Verfügung zu stellen, die weichmacherfrei ist, sich gut extrudieren und insbesondere kalandrieren läßt und die Formkörper, vorzugsweise Folien, liefert, die weich, elastisch, relativ zugfest und quellverschweißbar sind und eine hohe elektrische Leitfähigkeit, das heißt einen Oberflächenwiderstand von höchstens $10^8$ Ohm, besitzen.

Diese Aufgabe wird gelöst durch eine Formmasse, bestehend aus

A) 15 bis 75 Gew.-Teilen, vorzugsweise 35 bis 45 Gew.-Teilen, chloriertem Polyethylen mit einem mittleren Molekulargewicht von 10 000 bis 100 000 und einem Chlorgehalt von 20 bis 50 Gew.-%, bezogen auf das Gewicht des chlorierten Polyethylens,

B) 10 bis 20 Gew.-Teilen Polyethylen mit einer Dichte von 0,940 bis 0,965 g pro cm³ und einem Schmelzindex von 0,1 bis 60 g pro 10 min bei 190 °C und 49.03325N (5 kp) Belastung, und/oder Polypropylen mit einer Dichte von 0,900 bis 0,915 g pro cm³ und einem Schmelzindex von 0,5 bis 30 g pro 10 min bei 190 °C und 49.03325N (5 kp) Belastung,

C) 10 bis 70 Gew.-Teilen, vorzugsweise 40 bis 50 Gew.-Teilen, von einem Füllstoff, ausgewählt aus der Gruppe, bestehend aus Aluminiumhydroxid, Bariumsulfat, Calciumcarbonat, Magnesiumsilicat und Titandioxid mit einem mittleren Teilchendurchmesser von 0,5 bis 15 µm,

D) 10 bis 25 Gew.-Teilen, vorzugsweise 15 bis 20 Gew.-Teilen, Ruß mit einer spezifischen Oberfläche von 100 bis 400 m² pro g und einem mittleren Teilchendurchmesser von 10 bis 80 µm oder 4 bis 10 Gew.-

2

Teilen Ruß mit einer spezifischen Oberfläche von 700 bis 1 500 m² pro g und einem mittleren Teilchendurchmesser von 10 bis 80 μm,

E) 0,5 bis 2 Gew.-Teilen von einem Wärmestabilisator,

F) 0,1 bis 0,5 Gew.-Teilen von einem Gleitmittel und

G) 0,5 bis 5 Gew.-Teilen von einem anderen Verarbeitungshilfsstoff und gegebenenfalls

H) 15 bis 35 Gew.-Teilen von einem Vinylchloridpolymeren, wobei die Summe der Komponenten A), B), und C) 100 Gew.-Teile beträgt.

Die Einzelkomponenten der erfindungsgemäßen Formmasse sind als solche wohlbekannt und am Mark erhältlich. Das erfindungsgemäß einzusetzende chlorierte Polyethylen (Komponente A) ist ein Chlorierungsprodukt von Polyethylen und/oder von Mischpolymerisaten des Ethylens mit geringen Anteilen, vorzugsweise mit höchstens 1 bis 5 Mol-% Propen oder Buten-(1). Das Ethylenpolymerisat, das chloriert ist, kann im Niederdruck- oder Hochdruckverfahren hergestellt worden sein. Chloriertes Niederdruck-Polyethylen ist bevorzugt. Das mittlere Molekulargewicht des chlorierten Polyethylens beträgt etwa 10 000 bis 100 000, vorzugsweise etwa 20 000 bis 50 000 (berechnet aus dem Chlorgehalt und dem gelchromatographisch bestimmten Molekulargewicht des Ausgangspolyethylens ; vgl. Zeitschrift « Makromolekulare Chemie », Band 26, Jahr 1958, Seiten 96 bis 101, Verlag Dr. Alfred Hüthig, Heidelberg, Bundesrepublik Deutschland). Der Gehalt an Chlor beträgt 20 bis 50 Gew.-%, vorzugsweise 30 bis 42 Gew.-%, bezogen auf das chlorierte Polyethylen. Chlorierte Polyethylene werden nach verschiedenen Herstellungsverfahren erhalten, vorzugsweise durch Chlorierung in homogener oder in heterogener Phase. Die Chlorierung wird dabei vorzugsweise so geführt, daß möglichst homogen chlorierte Produkte entstehen, die im wesentlichen keine unchlorierten Polyolefinmoleküle mehr enthalten (in denen also möglichst jedes Polyolefinmolekül mindestens ein Chloratom enthält) und im Röntgenspektrum eine Reskristallinität von höchstens 5 Gew.-%, vorzugsweise höchstens 3 Gew.-%, aufweisen.

Das erfindungsgemäß einzusetzende Polyethylen (Komponente B) ist ein solches mit einer Dichte von 0,940 bis 0,965 g/cm³, vorzugsweise 0,945 bis 0,955 g/cm³ (gemessen nach DIN 53 479), und einem Schmelzindex (MFI = melt flow index) von 0,1 bis 60, vorzugsweise von 25 bis 35 g/10 min bei 190 °C und 49.03325 N (5 kp) Belastung (gemessen nach DIN 53 735). Das erfindungsgemäß einzusetzende Polypropylen ist ein solches mit einer Dichte von 0,900 bis 0,915 g/cm³ und einem Schmelzindex von 0,5 bis 30, vorzugsweise von 10 bis 25 g/10 min bei 190 °C und 49.03325 N (5 kp) Belastung.

Im Falle des Einsatzes von Polyethylen und Polypropylen in Mischung hat es sich als vorteilhaft erwiesen, ein Verhältnis von 1 : 1 zu nehmen. Als Komponente B ist Polyethylen allein bevorzugt.

Als Füllstoffe (Komponente C) werden erfindungsgemäß Aluminiumhydroxid, Bariumsulfat, Calciumcarbonat, Magnesiumsilicat und Titandioxid eingesetzt. Bevorzugte Füllstoffe sind Calciumcarbonat (Kreide), Magnesiumsilicat (Talkum) und Titandioxid. Besonders bevorzugt ist Calciumcarbonat. Dabei kann es sich um behandelte (gecoatete) oder unbehandelte Kreide handeln.

Die mittlere Korngröße des eingesetzten Füllstoffes soll 0,5 bis 15 μm, vorzugsweise 1 bis 8 μm, betragen.

Der erfindungsgemäß einzusetzende elektrisch leitfähige Ruß (Komponente D) ist ein solcher mit einer spezifischen Oberfläche von 100 bis 400, vorzugsweise 150 bis 300 m²/g, und einer mittleren Teilchengröße von 10 bis 80 μm, vorzugsweise von 15 bis 25 μm, oder ein solcher mit einer spezifischen Oberfläche von 700 bis 1 500, vorzugsweise 800 bis 1 200 m²/g, und einer mittleren Teilchengröße von 10 bis 80 μm, vorzugsweise von 25 bis 30 μm. Furnace-Ruß, Gasruß und der hochaktive Furnace-Ruß Ketjenblack EC sind Beispiele für geeignete, in Form von Pulver, Perlen und dergleichen vorkommenden Rußtypen. Als Komponente D) ist erfindungsgemäß Ruß mit einer spezifischen Oberfläche von 100 bis 400, vorzugsweise 150 bis 300 m²/g, und einer mittleren Teilchengröße von 10 bis 80 μm, vorzugsweise 15 bis 25 μm, bevorzugt.

Die erfindungsgemäßen Formmassen aus den beschriebenen Komponenten A), B), C) und D) enthalten auch noch die für die Extrudierung und Kalandrierung vorteilhaften Hilfsstoffe, nämlich Wärmestabilisatoren und Gleitmittel und als weitere Verarbeitungshilfsstoffe sogenannte processing aids.

Als Wärmestabilisatoren werden vorzugsweise die bekannten Dialkyl-Zinnverbindungen, wie Dimethylzinn-, Dibutylzinn- und Dioctylzinn-bis-2-ethylhexylthioglykolat und/oder epoxidiertes Sojabohnenöl eingesetzt. Die Menge an Wärmestabilisator beträgt vorzugsweise 0,5 bis 2 Gew.-Teile.

Als Gleitmittel werden vorzugsweise Wachs OP, ein 1,3-Butandiolmontansäureester gekälkt, so daß etwa 40 Gew.-% der zur Kälkung eingesetzten Montansäure als Calciumsalz vorliegen, Wachs E, ein 1,3-Butandiolmontansäureester, Stearinsäure und/oder Bis-stearylethylendiamin eingesetzt. Der Anteil an Gleitmittel in den Formmassen beträgt vorzugsweise 0,1 bis 0,5 Gew.-Teile.

Als processing aids (Verarbeitungshilfsstoffe) werden vorzugsweise Methylmethacrylat-Polymere und/oder Methylmethacrylat-Styrol-Copolymere eingesetzt. Die Menge beträgt vorzugsweise 0,5 bis 5,0 Gew.-Teile.

Zur Einstellung einer höheren Härte oder eines höheren Elastizitätsmoduls der aus den erfindungsgemäßen Formmassen erhaltenen Folien kann den Formmassen Vinylchloridpolymerisat, vorzugsweise Vinylchloridhomopolymerisat, zugemischt werden. Die Menge an Vinylchloridpolymerisat beträgt in diesem Falle 15 bis 35 Gew.-Teile.

**0 111 287**

Die Herstellung der erfindungsgemäßen Formmassen erfolgt durch Zusammenmischen der einzelnen Komponenten, zweckmäßigerweise in einem mit Mischwerkzeugen ausgerüsteten Mischer.

Die Verarbeitung der erfindungsgemäßen Formmassen zu Formkörpern erfolgt vorzugsweise durch Extrudieren und Kalandrieren. Dazu wird die durch Mischen der einzelnen Komponenten in einer üblichen Mischvorrichtung (Schnellmischer) erhaltene Formmasse auf einem Extruder oder Kalander bei Arbeitstemperaturen von 140 bis 225 °C, vorzugsweise von 165 bis 190 °C, verarbeitet. Im Falle der Herstellung von Folien beträgt ihre Dicke etwa 0,1 bis 0,7 mm, vorzugsweise 0,25 bis 0,5 mm.

Von den beiden Verarbeitungsverfahren ist die Kalandrierung zu Folien bevorzugt. Sie wird vorzugsweise derart durchgeführt, daß die Formmasse a) bei einer Temperatur von 100 bis 180 °C, vorzugsweise 120 bis 160 °C, vorgeliert wird, zweckmäßigerweise in einem Kneter und/oder auf einem aus mindestens zwei Walzen bestehenden Walzwerk, und b) das vorgelierte Material auf einem vorzugsweise aus vier Walzen bestehenden Kalander bei einer Walzentemperatur von 140 bis 225 °C, vorzugsweise 165 bis 190 °C, zur Folie kalandriert wird, wobei die Walzen im einzelnen derart erhitzt sind, daß die erste und die letzte Walze etwa die gleiche Temperatur und die dazwischenliegenden Walzen um 5 bis 10 °C höhere Temperaturen als die anderen beiden Walzen besitzen. Im Falle eines 4-Walzen-Kalanders weisen demnach die vier Walzen — in Materialrichtung — beispielsweise die nachstehenden Temperaturen auf : 1. Walze 170 °C, 2. Walze 175 °C, 3. Walze 175 °C, 4. Walze 170 °C.

Die kalandrierte Folie wird von der letzten Kalanderwalze abgezogen, mit Hilfe von Kühlwalzen gekühlt und in der Regel einer Aufwickeleinrichtung zugeführt. Die Dicke der Folien beträgt im allgemeinen 0,1 bis 0,7 mm, vorzugsweise 0,25 bis 0,5 mm.

Die erfindungsgemäßen Formmassen sind leicht und gut kalandrierbar und extrudierbar. Sie lassen sich beispielsweise ohne Schwierigkeiten auch mit relativ hoher Geschwindigkeit kalandrieren. Ihre Schmelzviskosität liegt in einem insbesondere für die Kalandrierung sehr günstigen Bereich.

Die erfindungsgemäß erhaltenen Folien sind weich (geschmeidig), elastisch, relativ zugfest und leichtverarbeitbar, insbesondere quellverschweißbar. Wegen ihres geringen Oberflächenwiderstandes sind sie gut elektrisch leitfähig. Neben all diesen gewünschten Eigenschaften weisen sie auch noch den Vorteil auf, daß sie migrationsfrei sind. Weichheit und Elastizität einerseits und Migrationsfreiheit andererseits zählen zu den sogenannten sich widersprechenden Eigenschaften. Es war bisher nicht möglich, insbesondere diese drei Eigenschaften in einer gleichzeitig elektrisch leitfähigen und gut extrudierbaren und kalandrierbaren Folie zu vereinen. Die neue Formmasse beziehungsweise die daraus hergestellten Folien weisen die Summe aller dieser wertvollen Eigenschaften auf, und zwar in einem jeweils unerwartet hohen Ausmaß. Die erfindungsgemäß erhaltenen Folien sind aufgrund ihrer wertvollen Eigenschaften vielfach verwendbar. Wegen ihrer Weichmacherfreiheit lassen sie sich bei der Handhabung von Kraftstoffen verwenden, wegen ihrer guten Leitfähigkeit in Verbindung mit Elastizität im Bergbau und bei Gasleitungen und Pipelines. Weitere Anwendungen ergeben sich bei der Herstellung von Kondensatoren oder zur Herstellung leitfähiger Verpackungen.

Die Erfindung wird anhand von Beispielen noch näher erläutert :

Beispiele 1 bis 19

Die Beispiele sind in der nachstehenden Tabelle zusammengefaßt.

Die angeführten Komponenten (die Mengen der einzelnen Komponenten sind Gewichtsteile) wurden in einem in der Kunststoffverarbeitung üblichen Schnellmischer gemischt und die Mischungen in einem Planetwalzenextruder bei Temperaturen von 120 bis 130 °C vorgeliert. Die Kalandrierung der einzelnen vorgelierten Formmassen erfolgte auf einem Kalander mit vier Walzen. Ihre Temperatur — in Folienlaufrichtung — betrug je nach Formmasse 165 bis 185 °C (Walze 1), 170 bis 190 °C (Walze 2), 170 bis 190 °C (Walze 3), 165 bis 185 °C (Walze 4). Die Dicke der einzelnen Folien war jeweils 0,3 mm.

Die Verarbeitbarkeit der Formmassen wurde mit den Noten sehr gut, gut und ausreichend bewertet. An den Folien wurde gemessen : der Oberflächenwiderstand nach DIN 53 482 als Maß für die elektrische Leitfähigkeit, die Shore-Härte D nach DIN 53 505 als Maß für die Weichheit, die Zugfestigkeit in Längs- und Querrichtung nach DIN 53 455 als Maß für die Festigkeit und die Bruchdehnung nach DIN 53 455 als Maß für die Elastizität. In der nachstehenden Tabelle sind auch die Meßergebnisse an den Folien aus den beispielsgemäßen Formmassen zusammengefaßt. Sie beweisen das oben angeführte, unerwartete Eigenschaftsbild und die überraschend guten Werte der einzelnen Eigenschaften der aus den erfindungsgemäßen Formmassen erhaltenen Folien.

Im folgenden werden die in der nachstehenden Tabelle in Kurzform angegebenen Komponenten näher beschrieben. Die mit CPE[1] bis CPE[4] bezeichneten chlorierten Polyethylene (CPE) besitzen die folgenden Merkmale :

(Siehe Tabellen Seite 5 f.)

4

| | Chlorgehalt (Gew.-%) | Molekular-gewicht |
|---|---|---|
| CPE[1] | 41 | 41 000 |
| CPE[2] | 39 | 20 000 |
| CPE[3] | 34 | 45 000 |
| CPE[4] | 39 | 45 000 |

Die mit PE[1] bis PE[4] bezeichneten Polyethylene (PE) und mit PP[1] und PP[2] bezeichneten Polypropylene (PP) besitzen die folgenden Merkmale:

| | Dichte (g/cm³) | MFI-Wert 190/5 (g/10 min) |
|---|---|---|
| PE[1] | 0,949 | 30 |
| PE[2] | 0,956 | 50 |
| PE[3] | 0,952 | 0,1 |
| PE[4] | 0,955 | 0,3 |
| PP[1] | 0,907 | 22 |
| PP[2] | 0,900 | 0,6 |

Die Mit Ruß[1] und Ruß[2] bezeichneten Ruße besitzen die folgenden Merkmale:

| | Spezifische Ober-fläche (m²/g) | Mittlerer Teil-chendurchmesser (μm) |
|---|---|---|
| Ruß[1] | 150 | 23 |
| Ruß[2] | 1000 | 30 |

(Siehe Tabelle Seite 6 ff.)

Tabelle

| Beispiel Nr. | 1 | 2 | 3 | 4 | 5 | 6 | 7 | 8 | 9 | 10 |
|---|---|---|---|---|---|---|---|---|---|---|
| CPE[1] | — | — | — | 40 | — | — | 35 | 57 | — | 65 |
| CPE[2] | — | — | — | — | — | — | — | — | 45 | — |
| CPE[3] | — | 45 | 45 | — | — | 15 | — | — | — | — |
| CPE[4] | 45 | — | — | — | 25 | — | — | — | — | — |
| PE[1] | 15 | 15 | 15 | 10 | 15 | 15 | — | — | — | — |
| PE[2] | — | — | — | — | — | — | — | 18 | — | — |
| PE[3] | — | — | — | — | — | — | — | — | — | — |
| PE[4] | — | — | — | — | — | — | — | — | 15 | 15 |
| PP[1] | — | — | — | — | — | — | 20 | — | — | — |
| PP[2] | — | — | — | — | — | — | — | — | — | — |
| Calciumcarbonat 1 µm | 40 | 40 | 40 | — | — | — | 45 | — | — | — |
| Calciumcarbonat 3 µm | — | — | — | — | — | 70 | — | 25 | 40 | 20 |
| Titandioxid 0,45 µm | — | — | — | — | 60 | — | — | — | — | — |
| Talkum 8 µm | — | — | — | 50 | — | — | — | — | — | — |
| Aluminiumhydroxid 0,4 µm | — | — | — | — | — | — | — | — | — | — |
| Ruß[1] | 15 | 20 | 25 | 14 | 10 | 15 | 16 | 20 | 18 | 25 |
| Ruß[2] | — | — | — | — | — | — | — | — | — | — |
| Wärmestabilisator | 1,5 | 1,5 | 1,5 | 1,5 | 1,5 | 1,5 | 1,5 | 1,5 | 1,5 | 1,5 |
| Gleitmittel | 0,3 | 0,3 | 0,3 | 0,3 | 0,3 | 0,3 | 0,3 | 0,3 | 0,3 | 0,3 |
| Processing Aid | 0,5 | 0,5 | 0,5 | 0,5 | 0,5 | 0,5 | 0,5 | 0,5 | 0,5 | 0,5 |
| Summe Gewichtsteile | 117,3 | 122,3 | 127,3 | 116,3 | 112,3 | 117,3 | 118,3 | 120,3 | 120,3 | 127,3 |
| Oberflächenwiderstand (Ω) | $10^8$ | $10^5$ | $10^3$ | $10^6$ | $10^7$ | $10^2$ | $10^5$ | $10^6$ | $10^5$ | $10^5$ |
| Shore-Härte-D | 42 | 46 | 42 | 46 | 51 | 58 | 49 | 40 | 44 | 36 |
| Zugfestigkeit (N/mm²) | 16/14 | 16/13 | 17/11 | 10/6 | 11/8 | 4/5 | 8/6 | 13/10 | 11/9 | 16/13 |
| Reißdehnung (%) | 387/399 | 306/420 | 372/564 | 198/151 | 212/310 | 3/3 | 226/188 | 366/395 | 386/367 | 335/363 |
| Verarbeitbarkeit | sehr gut | sehr gut | gut | sehr gut | gut | ausreichend | gut | sehr gut | sehr gut | gut |

## Tabelle (Fortsetzung)

| Beispiel Nr. | 11 | 12 | 13 | 14 | 15 | 16 | 17 | 18 | 19 |
|---|---|---|---|---|---|---|---|---|---|
| CPE[1] | 75 | – | – | – | – | – | – | – | – |
| CPE[2] | – | – | – | – | – | – | – | – | – |
| CPE[3] | – | – | – | – | – | – | – | – | – |
| CPE[4] | – | 20 | 15 | 40 | 30 | 25 | 70 | 45 | 45 |
| PE[1] | 15 | 15 | 15 | 15 | – | 15 | – | 15 | 15 |
| PE[2] | – | – | – | – | 15 | – | – | – | – |
| PE[3] | – | – | – | – | – | – | – | – | – |
| PE[4] | – | – | – | – | – | – | – | – | – |
| PP[1] | – | – | – | – | – | – | – | – | – |
| PP[2] | – | – | – | – | – | – | 20 | – | – |
| Calciumcarbonat 1 µm | – | – | – | – | 55 | – | – | – | – |
| Calciumcarbonat 3 µm | 10 | 65 | 70 | – | – | 60 | 10 | 40 | 40 |
| Titandioxid 0,45 µm | – | – | – | – | – | – | – | – | – |
| Talkum 8 µm | – | – | – | – | – | – | – | – | – |
| Aluminiumhydroxid 0,4 µm | – | – | – | 45 | – | – | – | – | – |
| Ruß[1] | 25 | 12 | 10 | 16 | – | – | – | – | – |
| Ruß[2] | – | – | – | – | 4 | 4 | 6 | 8 | 10 |
| Wärmestabilisator | 1,5 | 1,5 | 1,5 | 1,5 | 1,5 | 1,5 | 1,5 | 1,5 | 1,5 |
| Gleitmittel | 0,3 | 0,3 | 0,3 | 0,3 | 0,3 | 0,3 | 0,3 | 0,3 | 0,3 |
| Processing Aid | 0,5 | 0,5 | 0,5 | 4,5 | 0,5 | 0,5 | 0,5 | 0,5 | 0,5 |
| Summe Gewichtsteile | 127,3 | 114,3 | 112,3 | 118,3 | 106,3 | 106,3 | 108,3 | 110,3 | 112,3 |
| Oberflächenwiderstand ($\Omega$) | $10^7$ | $10^5$ | $10^5$ | $10^7$ | $10^5$ | $10^5$ | $10^6$ | 400 | 180 |
| Shore-Härte D | 32 | 55 | 61 | 50 | 48 | 52 | 34 | 45 | 49 |
| Zugfestigkeit (N/mm²) | 19/16 | 9/7 | 10/9 | 11/7 | 9/6 | 8/7 | 18/14 | 15/11 | 15/12 |
| Reißdehnung (%) | 391/429 | 232/176 | 12/8 | 126/178 | 179/272 | 108/178 | 421/545 | 300/379 | 276/365 |
| Verarbeitbarkeit | gut | aus-reichend | aus-reichend | sehr gut | gut | gut | gut | sehr gut | gut |

0 111 287

# 0 111 287

## Patentansprüche

1. Elektrisch-leitfähige, nicht vernetzte und kalandrierbare Formmasse auf der Basis von thermoplastischen Kunststoffen, anorganischen Füllstoffen und Ruß, bestehend aus

A) 15 bis 75 Gew.-Teilen chloriertem Polyethylen mit einem mittleren Molekulargewicht von 10 000 bis 100 000 und einem Chlorgehalt von 20 bis 50 Gew.-%, bezogen auf das Gewicht des chlorierten Polyethylens,

B) 10 bis 20 Gew.-Teilen Polyethylen mit einer Dichte von 0,940 bis 0,965 g pro $cm^3$ und einem Schmelzindex von 0,1 bis 60 g pro 10 min bei 190 °C und 49.03325 N (5 kp) Belastung und/oder Polypropylen mit einer Dichte von 0,900 bis 0,915 g pro $cm^3$ und einem Schmelzindex von 0,5 bis 30 g pro 10 min bei 190 °C und 49.03325 N (5 kp) Belastung,

C) 10 bis 70 Gew.-Teilen von einem Füllstoff, ausgewählt aus der Gruppe, bestehend aus Aluminiumhydroxid, Bariumsulfat, Calciumcarbonat, Magnesiumsilicat und Titandioxid mit einem mittleren Teilchendurchmesser von 0,5 bis 15 μm,

D) 10 bis 25 Gew.-Teilen Ruß mit einer spezifischen Oberfläche von 100 bis 400 $m^2$ pro g und einem mittleren Teilchendurchmesser von 10 bis 80 μm oder 4 bis 10 Gew.-Teilen Ruß mit einer spezifischen Oberfläche von 700 bis 1 500 $m^2$ pro g und einem mittleren Teilchendurchmesser von 10 bis 80 μm,

E) 0,5 bis 2 Gew.-Teilen von einem Wärmestabilisator,

F) 0,1 bis 0,5 Gew.-Teilen von einem anderen Gleitmittel und

G) 0,5 bis 5 Gew.-Teilen von einem anderen Verarbeitungshilfsstoff und gegebenenfalls

H) 15 bis 35 Gew.-Teilen von einem Vinylchloridpolymeren, wobei die Summe der Komponenten A), B) und C) 100 Gew.-Teile beträgt.

2. Formmasse nach Anspruch 1, dadurch gekennzeichnet, daß die Komponente a) ein chloriertes Polyethylen mit einem mittleren Molekulargewicht von 20 000 bis 50 000 und einem Chlorgehalt von 30 bis 42 Gew.-%, die Komponente B) ein Polyethylen mit einer Dichte von 0,945 bis 0,955 g/$cm^3$ und einem Schmelzindex von 25 bis 35 g pro 10 min bei 190 °C und 49.03325 N (5 kp) Belastung und/oder ein Polypropylen mit einer Dichte von 0,900 bis 0,915 g/$cm^3$ und einem Schmelzindex von 10 bis 25 g pro 10 min bei 190 °C und 49.03325 N (5 kp) Belastung, die Komponente C) Calciumcarbonat, Magnesiumsilicat und/oder Titandioxid mit einem mittleren Teilchendurchmesser von 1 bis 8 μm und die Komponente D) Ruß mit einer spezifischen Oberfläche von 150 bis 300 $m^2$ pro g und einem mittleren Teilchendurchmesser von 15 bis 25 μm oder Ruß mit einer spezifischen Oberfläche von 800 bis 1 200 $m^2$ pro g und einem mittleren Teilchendurchmesser von 25 bis 30 μm ist.

3. Formmasse nach Anspruch 1, dadurch gekennzeichnet, daß die Komponente A) ein chloriertes Polyethylen mit einem mittleren Molekulargewicht von 20 000 bis 50 000 und einem Chlorgehalt von 30 bis 42 Gew.-%, die Komponente B) ein Polyethylen mit einer Dichte von 0,945 bis 0,955 g pro $cm^3$ und einem Schmelzindex von 25 bis 35 g pro 10 min bei 190 °C und 49.03325 N (5 kp) Belastung, die Komponente C) Calciumcarbonat mit einem mittleren Teilchendurchmesser von 1 bis 8 μm und die Komponente D) Ruß mit einer spezifischen Oberfläche von 150 bis 300 $m^2$ pro g und einem mittleren Teilchendurchmesser von 15 bis 25 μm ist.

4. Formmasse nach Anspruch 1, dadurch gekennzeichnet, daß sie die Komponenten A) bis D) in den folgenden Gewichtsteilen enthält :

A) 35 bis 45

B) 10 bis 20

C) 40 bis 50

D) 15 bis 20 bzw. 4 bis 10.

5. Folien, hergestellt aus den Formmassen nach einem der Ansprüche 1 bis 4.

6. Folien nach Anspruch 5, hergestellt durch a) Vorgelieren der Formmasse bei einer Temperatur von 120 bis 160 °C und b) Kalandrieren des vorgelierten Materials auf einem Kalander mit 4 Walzen bei einer Walzentemperatur von 165 bis 190 °C, wobei die Walzen im einzelnen derart erhitzt sind, daß die erste und die letzte Walze etwa die gleiche Temperatur und die dazwischenliegenden Walzen um 5 bis 10 °C höhere Temperaturen als die anderen beiden Walzen besitzen.

## Claims

1. A non cross-linkable, electrically conductive and calenderable moulding mass based on thermoplastic plastics, inorganic fillers and soot consisting of

A) 15 to 75 parts by weight of a chlorinated polyethylene having a mean molecular mass of 10,000 to 100,000 and a chlorine content of 20 to 50 % by weight, relative to the weight of the chlorinated polyethylene,

B) 10 to 20 parts by weight of polyethylene having a density of 0.940 to 0.965 g/$cm^3$ and a melt index of 0.1 to 60 g/10 minutes at 190 °C and 49,03325 N (5 kp) of load, and/or polypropylene having a density of 0.900 to 0.915 g/$cm^3$ and a melt index of 0.5 to 30 g/10 minutes at 190 °C and 49,03325 N (5 kp) of load,

8

C) 10 to 70 parts by weight of a filler selected from the group consisting of aluminium hydroxide, barium sulfate, calcium carbonate, magnesium silicate and titanum dioxide having a mean particle diameter of 0.5 to 15 μm,

D) 10 to 25 parts by weight of soot having a specific surface of 100 to 400 $m^2/g$ and a mean particle diameter of 10 to 80 μm, or 4 to 10 parts by weight of soot having a specific surface of 700 to 1,500 $m^2/g$ and a mean particle diameter of 10 to 80 μm,

E) 0.5 to 2 parts by weight of the heat stabilizer,

F) 0.1 to 0.5 parts by weight of the lubricant, and

G) 0.5 to 5 parts by weight of a further processing auxiliary, and in case

H) 15 to 35 parts by weight of a vinyl chloride polymer, the sum of the components A), B) and C) being 100 parts by weight.

2. A mass as claimed in claim 1, wherein the component A) is a chlorinated polyethylene having a mean molecular mass of 20,000 to 50,000 and a chlorine content of 30 to 42 % by weight, the component B) is a polyethylene having a density of 0.945 to 0.955 $g/cm^3$ and a melt index of 25 to 35 g/10 minutes at 190 °C and 49,03325 N of load, and/or a polypropylene having a density of 0.900 to 0.915 $g/cm^3$ and a melt index of 10 to 25 g/10 minutes at 190 °C and 49,03325 N of load, the component C) is calcium carbonate, magnesium silicate and/or titanum dioxide having a mean particle diameter of 1 to 8 μm, and the component D) is soot having a specific surface of 150 to 300 $m^2/g$ and a mean particle diameter of 15 to 25 μm, or soot having a specific surface of 800 to 1,200 $m^2/g$ and a mean particle diameter of 25 to 30 μm.

3. A mass as claimed in claim 1, wherein the component A) is a chlorinated polyethylene having a mean molecular weight of 20,000 to 50,000 and a chlorine content of 30 to 42 % by weight, the component B) is a polyethylene having a density of 0.945 to 0.955 $g/cm^3$ and a melt index of 25 to 35 g/10 minutes at 190 °C and 49,03325 N of load, the component C) is calcium carbonate having a mean particle diameter of 1 to 8 μm, and the component C) is soot having a specific surface of 150 to 300 $m^2/g$ and a mean particle diameter of 15 to 25 μm.

4. A mass as claimed in claim 1, wherein the components A) to D) are present in the following parts by weight :

A) 35 to 45

B) 10 to 20

C) 40 to 50

D) 15 to 20 or 4 to 10.

5. Sheets manufactured from the masses as claimed in claims 1 to 4.

6. Sheets as claimed in claim 5, which has been manufactured by a) fusion of the mass at a temperature of 120 to 160 °C and b) calandering the fused mass on a calander having four rolls at a temperature of 165 to 190 °C, the four rolls being heated in particular in such a manner that the first and the last roll have about the same temperature and the two other rolls have a temperature which is 5 to 10 °C higher than the temperature of the first and the last roll.

**Revendications**

1. Matière à mouler conductrice de l'électricité, non réticulée et calandrable, à base de matières thermoplastiques de synthèse, de charges minérales et de noir de carbone, matière à mouler caractérisée en ce qu'elle est constituée :

A) de 15 à 75 parties en poids d'un polyéthylène chloré ayant une masse moléculaire moyenne de 10 000 à 100 000 et une teneur en chlore de 20 à 50 % en poids, par rapport au poids du polyéthylène chloré,

B) de 10 à 20 parties en poids d'un polyéthylène ayant une masse volumique de 0,940 à 0,965 $g/cm^3$ et un indice de fusion de 0,1 à 60 g pour 10 mn à 190 °C et sous une charge de 49,0 N, et/ou d'un polypropylène ayant une masse volumique de 0,900 à 0,915 $g/cm^3$ et un indice de fusion de 0,5 à 30 g pour 10 mn à 190 °C et sous une charge de 49,0 N,

C) de 10 à 70 parties en poids d'une charge prise dans l'ensemble constitué par l'hydroxyde d'aluminium, le sulfate de baryum, le carbonate de calcium, le silicate de magnésium et le dioxyde de titane d'un diamètre particulaire moyen de 0,5 à 15 μm,

D) de 10 à 25 parties en poids d'un noir de carbone ayant une surface spécifique de 100 à 400 $m^2/g$ et un diamètre particulaire moyen de 10 à 80 μm, ou de 4 à 10 parties en poids d'un noir de carbone ayant une surface spécifique de 700 à 1 500 $m^2/g$ et un diamètre particulaire moyen de 10 à 80 μm,

E) de 0,5 à 2 parties en poids d'un stabilisant à la chaleur,

F) de 0,1 à 0,5 partie en poids d'un lubrifiant,

G) de 0,5 à 5 parties en poids d'un autre adjuvant de mise en œuvre et, éventuellement :

H) de 15 à 35 parties en poids d'un polymère du chlorure de vinyle, la somme des quantités des composantes A), B) et C) étant égale à 100 parties en poids.

2. Matière à mouler selon la revendication 1 caractérisée en ce que la composante A) est un polyéthylène chloré qui a une masse moléculaire moyenne de 20 000 à 50 000 et une teneur en chlore de 30 à 42 % en poids, la composante B) est un polyéthylène qui a une masse spécifique de 0,945 à 0,955 g/cm³ et un indice de fusion de 25 à 35 g pour 10 mn à 190 °C et sous une charge de 49,0 N, et/ou un polypropylène qui a une masse spécifique de 0,900 à 0,915 g/cm³ et un indice de fusion de 10 à 25 g pour 10 mn à 190 °C et sous une charge de 49,0 N, la composante C) est du carbonate de calcium, du silicate de magnésium et/ou du dioxyde de titane d'un diamètre particulaire moyen de 1 à 8 µm, et la composante D) est du noir de carbone ayant une surface spécifique de 150 à 300 m²/g et un diamètre particulaire moyen de 15 à 25 µm, ou du noir de carbone ayant une surface spécifique de 800 à 1 200 m²/g et un diamètre particulaire moyen de 25 à 30 µm.

3. Matière à mouler selon la revendication 1 caractérisée en ce que la composante A) est un polyéthylène chloré qui a une masse moléculaire moyenne de 20 000 à 50 000 et une teneur en chlore de 30 à 42 % en poids, la composante B) est un polyéthylène qui a une masse spécifique de 0,945 à 0,955 g/cm³ et un indice de fusion de 25 à 35 g pour 10 mn à 190 °C et sous une charge de 49,0 N, la composante C) est du carbonate de calcium ayant un diamètre particulaire moyen de 1 à 8 µm, et la composante D) est du noir de carbone ayant une surface spécifique de 150 à 300 m²/g et un diamètre particulaire moyen de 15 à 25 µm.

4. Matière à mouler selon la revendication 1 caractérisée en ce que les composantes A) à D) y sont contenues en les quantités suivantes, en parties en poids :
A) de 35 à 45
B) de 10 à 20
C) de 40 à 50
D) de 15 à 20 ou de 4 à 10.

5. Feuilles qui ont été fabriquées à partir des matières à mouler selon l'une quelconque des revendications 1 à 4.

6. Feuilles selon la revendication 5 que l'on a fabriquées a) en prégélifiant la matière à mouler à une température de 120 à 160 °C et b) en calandrant la matière gélifiée sur une calandre à quatre cylindres à une température des cylindres de 165 à 190 °C, les cylindres étant plus précisément chauffés de telle façon que le premier et le dernier soient à peu près à la même température et que les cylindres intermédiaires soient à des températures supérieures de 5 à 10 °C à celle des deux autres cylindres.